**Europäisches Patentamt**

**European Patent Office**

**Office européen des brevets**

(19)

(11) Veröffentlichungsnummer : **0 080 639
B1**

(12) **EUROPÄISCHE PATENTSCHRIFT**

(45) Veröffentlichungstag der Patentschrift :
05.03.86

(21) Anmeldenummer : 82110528.5

(22) Anmeldetag : 15.11.82

(51) Int. Cl.⁴ : **G 01 P 3/46**, G 01 P 13/04

(54) Verfahren zur Erzeugung einer drehzahlproportionalen Spannung und Schaltungsanordnung zur Durchführung des Verfahrens.

(30) Priorität : 27.11.81 DE 3147145

(43) Veröffentlichungstag der Anmeldung :
08.06.83 Patentblatt 83/23

(45) Bekanntmachung des Hinweises auf die Patenterteilung : 05.03.86 Patentblatt 86/10

(84) Benannte Vertragsstaaten :
DE FR GB IT

(56) Entgegenhaltungen :
WO-A-82 /015 94
DE-A- 1 926 628
JP-A-51 065 978
US-A- 2 979 623
US-A- 3 501 651
US-A- 3 882 402
US-A- 3 902 116

(73) Patentinhaber : Siemens Aktiengesellschaft
Berlin und München Wittelsbacherplatz 2
D-8000 München 2 (DE)

(72) Erfinder : Zander, Hans-Hermann, Dipl.-Ing.
Würzburger Ring 86
D-8520 Erlangen (DE)

EP 0 080 639 B1

## Beschreibung

Die Erfindung betrifft ein Verfahren zur Erzeugung einer drehzahlproportionalen Spannung mit einem inkrementalen Lagegeber, der zwei in Abhängigkeit von der Drehrichtung um 90° in positiver oder negativer Richtung gegeneinander verschobene Geber-Spannungen mit drehzahlunabhängiger Amplitude liefert und der durch Addition und Subtraktion der ersten und zweiten Geber-Spannung eine Summenspannung und eine Differenzspannung erzeugt, so daß Zusammensetzen eine drehzahlabhängige, in ihrem Vorzeichen der Drehrichtung des Lagegebers entsprechende Ausgangsspannung entsteht und eine Schaltungsanordnung zur Durchführung des Verfahrens.

Eine derartig aufgebaute Vorrichtung zur Erzeugung einer drehzahlproportionalen Spannung ist aus der US-A-38 82 402 bekannt. Bei dieser Vorrichtung werden sinusförmige, um 90° el gegeneinander versetzte Gebersignale zur Geschwindigkeitsmessung ausgenutzt. Dazu werden diese Signale differenziert und das Ergebnis der Differentiation wird getaktet und zu einem Geschwindigkeitssignal verarbeitet. Das Takten erfolgt dabei unter Zuhilfenahme einer aus beiden Gebersignalen gewonnenen Summenspannung und aus beiden Gebersignalen gewonnenen Differenzspannung. Wesentlich für die Summen- bzw. Differenzspannung ist dabei, daß diese jeweils um 45° zu den Geberspannungen verlaufende Hilfsspannung in einfacher Weise sich erzeugen lassen. Aber bei dieser Anordnung können aufgrund von Versorgungsspannungsänderungen die Geberspannungen beeinflußt werden. Dies führt zu einer Verfälschung des Meßergebnisses für die Geschwindigkeit. Ein ungewollter Amplitudenanstieg der sinusförmigen Geberspannungen würde aufgrund der sich ergebenden größeren Steilheit eine höhere Geschwindigkeit simulieren, während eine Amplitudenverringerung der sinusförmigen Geberspannungen eine Geschwindigkeitsabsenkung simulieren würde.

Aufgabe der Erfindung ist es daher, ein Verfahren zur Erzeugung einer drehzahlproportionalen Spannung und eine Schaltungsanordnung zur Durchführung des Verfahrens anzugeben, wobei bei Einsatz in inkrementalen Lagegebern die Reaktionszeit auf Drehzahländerungen gering ist.

Diese Aufgabe wird beim eingangs genannten Verfahren erfindungsgemäß dadurch gelöst — wie im Patentanspruch 1 angegeben —, daß die Summenspannung und die Differenzspannung jeweils in einem Bereich von ± 45° um den Nulldurchgang der betreffenden Spannung differenziert werden, und daß die differenzierten Spannungen in Abhängigkeit von der Phasenlage der ersten und der zweiten Geber-Spannung gesteuert gleichgerichtet und zu einer Ausgangsspannung zusammengesetzt werden.

Es wird also ein drehzahlproportionales Signal durch Differentiation von 90°-Blöcken der Summen- und der Differenzspannung der beiden Geber-Spannungen erzeugt. Da die Differentiation in einem Bereich erfolgt, in dem beispielsweise sinusförmige Spannungen relativ linear sind, entsteht ein Spannungsverlauf, der nahezu Rechteckform aufweist. Da durch Addition und Subtraktion der beiden Geber-Spannungen Amplitudenabweichungen der beiden Wechselspannungen ausgeglichen werden, weisen alle Rechteckblöcke dieselbe Höhe auf. Nach einer gesteuerten Gleichrichtung, d. h. Zusammensetzen der Rechteckblöcke entsteht daher eine drehzahlproportionale Ausgangsspannung, die eine geringe Welligkeit aufweist. Eine zusätzliche Glättung dieser Ausgangsspannung, die eine störende Zeitkonstante bedingen würde, ist daher für die meisten Anwendungsfälle nicht nötig. Da bei dem erfindungsgemäßen Verfahren die Drehzahlbestimmung nicht wie bei herkömmlichen Verfahren durch Zählen von Impulsen, sondern durch Ermittlung der Anstiegsgeschwindigkeit jedes einzelnen Impulses erfolgt, wird die Reaktionszeit auf Drehzahländerungen sehr kurz. Der verwendete Lagegeber kann gleichzeitig zur Lage- und zur Geschwindigkeitsmessung eingesetzt werden.

Vorteilhafterweise wird die Summenspannung auf einen Differentiator durchgeschaltet, wenn die erste Geber-Spannung positiv und die zweite Geber-Spannung negativ ist, die Differenzspannung auf den Differentiator durchgeschaltet, wenn die erste und die zweite Geber-Spannung positiv sind, die invertierte Summenspannung auf den Differentiator durchgeschaltet, wenn die erste Geber-Spannung negativ und die zweite Geber-Spannung positiv ist und die invertierte Differenzspannung auf den Differentiator durchgeschaltet, wenn die erste und die zweite Geber-Spannung negativ sind. Damit wird also eine logische Verknüpfung der Polaritäten der Geber-Spannungen zur Bildung der 90°-Blöcke aus Summen- bzw. Differenzspannung herangezogen. Durch Auswahl der invertierten bzw. nichtinvertierten Summen- bzw. Differenzspannung entsteht beim Zusammensetzen der einzelnen Blöcke ein Wechselspannungsverlauf. Dabei ist es wesentlich, daß dieser Wechselspannungsverlauf keine Sprungstellen aufweist, da diese zu Spannungsspitzen in der differenzierten Spannung führen würden. Diese Forderung ist mit der dargestellten Zusammensetzung erfüllt.

Zur gesteuerten Gleichrichtung wird zweckmäßigerweise die differenzierte Spannung invertiert, wenn die Momentanwerte der beiden Geber-Spannungen dieselbe Polarität aufweisen und die differenzierte Spannung bleibt unverändert, wenn die Momentanwerte der beiden entgegengesetzte Polarität aufweist. Damit wird eine logische Verknüpfung der Polaritäten der beiden Geber-Spannungen auch zur Steuerung der Gleichrichtung herangezogen, um ein Ausgangssignal zu erzielen, dessen Polarität der Drehrichtung des Drehzahlgebers entspricht.

Bei einer Schaltungsanordnung gemäß Patentanspruch 4 zur Durchführung des Verfahrens werden zweckmäßigerweise die beiden Geber-Spannungen des Lagegebers jeweils einem Eingang eines Addierers und eines Subtrahierers zugeführt, wobei die Ausgänge des Addierers und des Subtrahierers direkt und über je einen Inverter mit den Eingängen einer Auswahlschaltung verbunden sind, wobei die Auswahlschaltung durch zwei Null-Komparatoren gesteuert wird, an deren Eingängen jeweils eine der beiden Geber-Spannungen des Lagegebers ansteht, wobei die Auswahlschaltung in Abhängigkeit von den Ausgangssignalen der beiden Null-Komparatoren einen ihrer Eingänge auf ihren Ausgang durchschaltet, wobei der Auswahlschaltung eine Differenzierstufe nachgeschaltet ist und wobei der Ausgang der Differenzierstufe mit einem in Abhängigkeit von den Ausgangssignalen der beiden Null-Komparatoren gesteuerten Gleichrichter verbunden ist, an dessen Ausgang das gewünschte drehzahlproportionale Ausgangssignal ansteht. Mit einer derartigen Schaltungsanordnung kann das erfindungsgemäße Verfahren mit wenigen handelsüblichen Bauelementen realisiert werden.

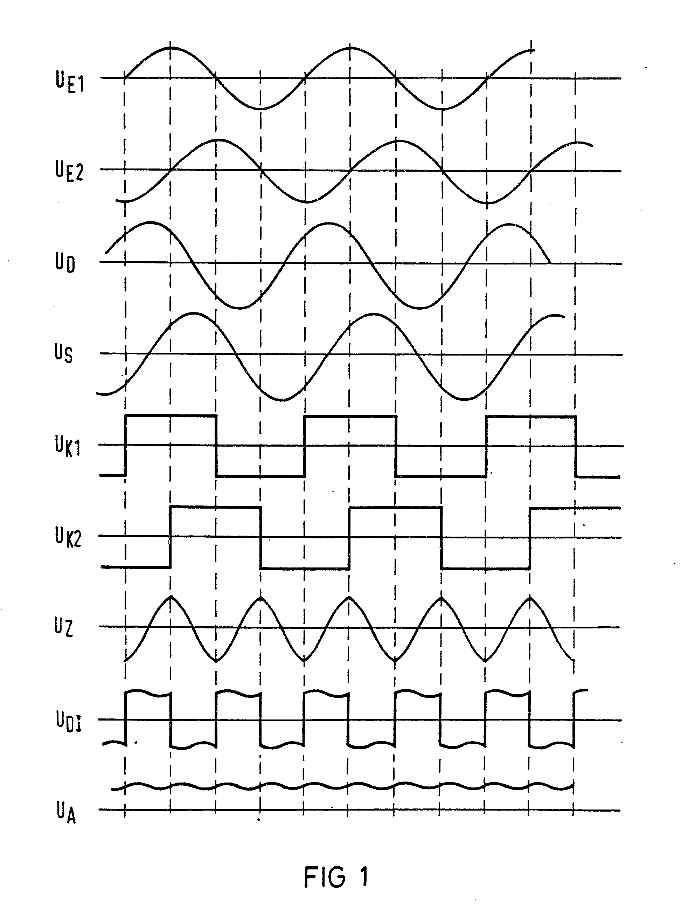

Ein Ausführungsbeispiel der Erfindung wird nachfolgend anhand der Figuren 1 bis 5 näher erläutert.

Figur 1 zeigt ein Spannungsdiagramm zur Erläuterung des erfindungsgemäßen Verfahrens. Ein Lagegeber liefert zwei Wechselspannungen $U_{E1}$, $U_{E2}$, die im folgenden als Geber-Spannungen bezeichnet werden. Diese Spannungen sind im Ausführungsbeispiel annähernd sinusförmig, wie dies bei vielen Lagegebern der Fall ist. Es würde sich jedoch auch jede andere Spannungsform mit Ausnahme von in der Praxis nicht vorkommenden reinen Rechteckspannungen für das im folgenden beschriebene Verfahren eignen. Die Frequenz der Geber-Spannungen $U_{E1}$, $U_{E2}$ ist drehzahlproportional, während die Amplitude drehzahlunabhängig ist. Die Geber-Spannung $U_{E2}$ weist im Ausführungsbeispiel gegenüber der Geber-Spannung $U_{E1}$ definitionsgemäß eine Phasenverschiebung von $+90°$ und bei negativer Drehrichtung eine Phasenverschiebung von $-90°$ auf: Die Geber-Spannungen $U_{E1}$ und $U_{E2}$ werden zu einer Summenspannung $U_S$ addiert und zu einer Differenzspannung $U_D$ subtrahiert. Durch Addition und Subtraktion entstehen also wieder zwei Wechselspannungen mit einer Phasenverschiebung von ebenfalls $\pm 90°$, deren Frequenz mit der Frequenz der Geber-Spannungen $U_{E1}$, $U_{E2}$ übereinstimmt. Die Amplitude der Summenspannung $U_S$ und der Differenzspannung $U_D$ ist gleich der Summe der Amplituden der Geber-Spannungen $U_{E1}$ und $U_{E2}$. Auch wenn sich die Amplituden der Geber-Spannungen $U_{E1}$ und $U_{E2}$ unterscheiden, weisen also die Summenspannung $U_S$ und die Differenzspannung $U_D$ stets die gleiche Amplitude auf. Die Summenspannung und die Differenzspannung weisen gegenüber den Geber-Spannungen $U_{E1}$ und $U_{E2}$ eine Phasenverschiebung von $+$ bzw. $-45°$ auf.

Aus der Summenspannung $U_S$ und der Differenzspannung $U_D$ werden nun Spannungsblöcke in einem Bereich von $\pm 45°$ um den Nulldurchgang der betreffenden Spannungen herausgeschnitten. Diese Spannungsblöcke werden dann, gegebenenfalls nach einer Inversion, so zusammengesetzt, daß sich eine sprungfreie Hilfsspannung $U_Z$ ergibt. Zur Bestimmung der gewünschten Spannungsblöcke wird die Tatsache ausgenutzt, daß die Summen- bzw. Differenzspannung $U_S$, $U_D$ gegenüber den Geber-Spannungen $U_{E1}$, $U_{E2}$ um $\pm 45°$ verschoben sind. Dabei werden die mit $U_{K1}$ bzw. $U_{K2}$ bezeichneten Polaritäten der Geber-Spannungen $U_{E1}$ und $U_{E2}$ miteinander verglichen. Während $U_{K1}$ positiv und $U_{K2}$ negativ ist, wird die Summenspannung $U_S$ zur Bildung der Hilfsspannung $U_Z$ verwendet. Während beide Polaritäten $U_{K1}$ und $U_{K2}$ positiv sind, wird die Differenzspannung $U_D$ zur Bildung der Hilfsfunktion $U_Z$ herangezogen. Wenn $U_{K1}$ negativ und $U_{K2}$ positiv ist, so wird $U_S$ invertiert zur Bildung der Hilfsspannung $U_Z$ herangezogen und wenn $U_{K1}$ und $U_{K2}$ negativ sind, so wird $U_D$ invertiert zur Bildung der Hilfsspannung $U_Z$ herangezogen. Es ergibt sich also folgende logische Verknüpfung :

$$(U_{K1} \text{ positiv}) \quad (U_{K2} \text{ negativ}) \Rightarrow U_Z = U_S$$
$$(U_{K1} \text{ positiv}) \quad (U_{K2} \text{ positiv}) \Rightarrow U_Z = U_D$$
$$(U_{K1} \text{ negativ}) \quad (U_{K2} \text{ positiv}) \Rightarrow U_Z = \bar{U}_S$$
$$(U_{K1} \text{ negativ}) \quad (U_{K2} \text{ negativ}) \Rightarrow U_Z = \bar{U}_D$$

Durch geeignetes Zusammensetzen von 90°-Spannungsblöcken der Summenspannung $U_S$ und der Differenzspannung $U_D$ erhält man also eine Hilfs-Wechselspannung $U_Z$, deren Frequenz gegenüber der Frequenz der Geber-Spannungen $U_{E1}$ und $U_{E2}$ verdoppelt ist. Die Hilfsspannung $U_Z$ weist keine Sprünge auf, da die Amplituden der Summenspannung $U_S$ und der Differenzspannung $U_D$ wie beschrieben gleich sind und diese Spannungen jeweils 45° vor bzw. nach dem Nulldurchgang gleiche Momentanwerte haben.

Die Hilfsspannung $U_Z$ wird nun differenziert, wobei sich die Spannung $U_{Di}$ ergibt. Die Amplitude dieser Spannung ist aufgrund des bekannten mathematischen Zusammenhangs unabhängig von der vorgegebenen Spannungsform proportional der Frequenz der Hilfsspannung $U_Z$ und damit auch proportional der Drehzahl des Lagegebers. Dabei hat das beschriebene Verfahren den Vorteil, daß sich die Hilfsspannung $U_Z$ aus Blöcken der Summenspannung $U_S$ und der Differenzspannung $U_D$ zusammensetzt, die im Bereich des verhältnismäßig linearen Teils einer angenäherten Sinuskurve liegt. Die differenzierte Spannung $U_{Di}$ setzt sich daher aus angenäherten Rechteckimpulsen zusammen, wobei jeder Rechteckimpuls eine verhältnismäßig geringe Welligkeit aufweist. Wenn man die differenzierte Spannung $U_{Di}$ gleichrichtet, so erhält man als Ausgangsspannung $U_A$ eine Gleichspannung mit verhältnismäßig geringer Welligkeit, die der Drehzahl des Drehzahlgebers proportional ist. Damit die Polarität des Ausgangssignals $U_A$ der Drehrichtung des Lagegebers entspricht, ist eine gesteuerte Gleichrichtung, d. h. ein gesteuertes Zusammensetzen der positiven und negativen Impulse der differenzierten Spannung $U_{Di}$ erforderlich. Dies wird erreicht, indem man zur Bildung der Ausgangsspannung $U_A$ die invertierte differenzierte Spannung $U_{Di}$ heranzieht, solange die Polarität der Geber- Spannungen $U_{E1}$ und $U_{E2}$ gleich ist und die nichtinvertierte differenzierte Spannung $U_{Di}$ heranzieht, solange die Polarität der beiden Geber-Spannungen $U_{E1}$ und $U_{E2}$ verschieden ist. Bei dem in Figur 1 dargestellten Beispiel der positiven Drehrichtung erhält man also auch ein positives Ausgangs-signal $U_A$.

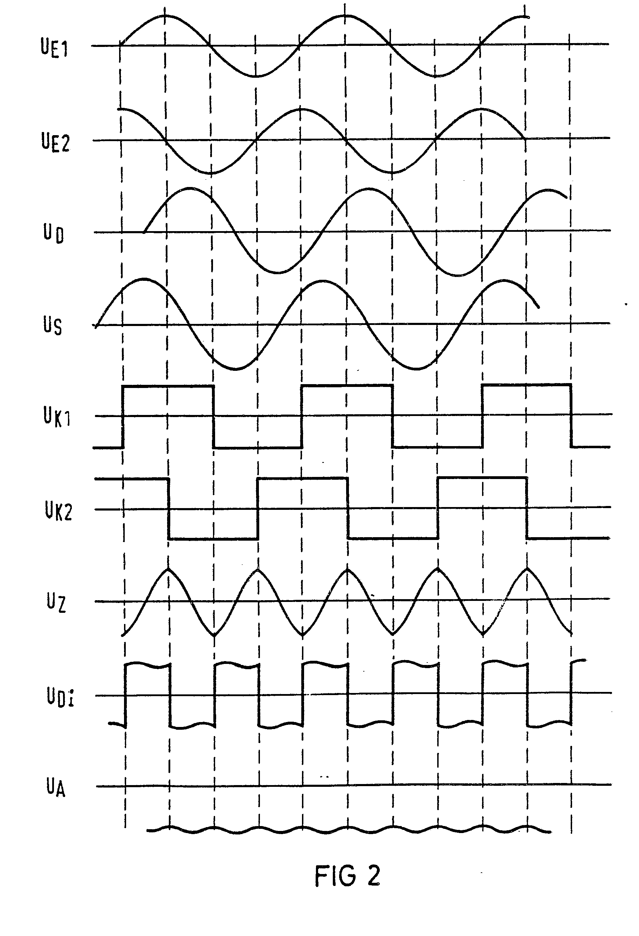

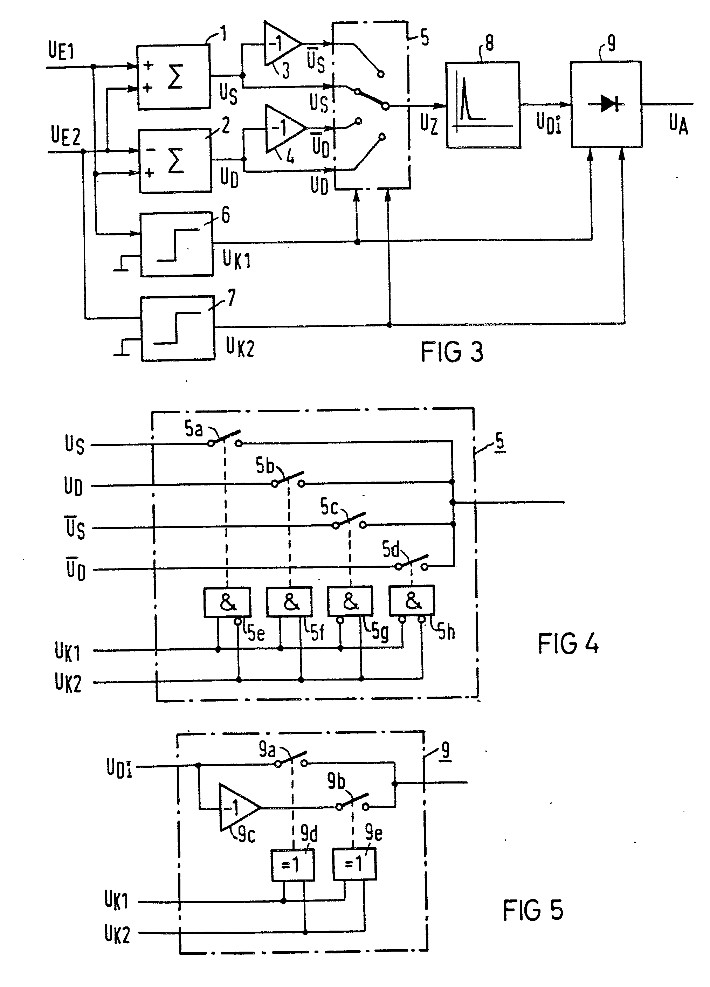

Der Fall der negativen Drehrichtung ist in Figur 2 dargestellt, wobei Figur 2 die Diagramme für dieselben Spannungen wie Figur 1 zeigt. Dabei eilt die Geber-Spannung $U_{E2}$ der Geber-Spannung $U_{E1}$ nicht um 90° nach, sondern um 90° vor. Entsprechend hat auch die Summenspannung eine Phasenverschiebung von − 90° gegenüber der Differenzspannung. Wie Figur 3 zeigt, bleibt die Hilfsspannung $U_Z$ und damit auch die differenzierte Spannung $U_{Di}$ bei negativer Drehrichtung unverändert. Aufgrund der angegebenen logischen Verknüpfung zur gesteuerten Gleichrichtung der differenzierten Spannung — also Inversion der differenzierten Spannung $U_{Di}$, wenn Vorzeichen von $U_{E1}$ und $U_{E2}$ übereinstimmen, keine Inversion, wenn $U_{E1}$ und $U_{E2}$ unterschiedliches Vorzeichen haben — ergibt sich jedoch, wie gewünscht, eine negative Ausgangsspannung $U_A$.

Mit dem beschriebenen Verfahren erhält man also eine geschwindigkeitsproportionale Ausgangsspannung $U_A$, deren Polarität der Drehrichtung des Lagegebers entspricht. Da zur Drehzahlmessung jeder einzelne Impuls ausgewertet wird und keine Glättung erforderlich ist, reagiert die Ausgangsspannung $U_A$ sehr schnell auf Drehzahländerungen.

Figur 3 zeigt ein Schaltungsbeispiel zur Realisierung des erfindungsgemäßen Verfahrens. Die von einem nicht dargestellten Lagegeber gelieferten Geber-Spannungen $U_{E1}$ und $U_{E2}$ werden den Additionseingängen eines Summierers 1 zugeführt. Außerdem wird die Geber-Spannung $U_{E1}$ dem Additionseingang und die Geber-Spannung $U_{E2}$ dem Subtraktionseingang eines Subtrahierers 2 zugeführt. Die Ausgänge des Addierers 1 und des Subtrahierers 2, an denen die Summenspannung $U_S$ bzw. die Differenzspannung $U_D$ ansteht, sind jeweils direkt und über einen Inverter 3 bzw. 4 mit den Eingängen einer Auswahlschaltung 5 verbunden.

Die Geber-Spannungen $U_{E1}$ und $U_{E2}$ sind außerdem jeweils mit einem Eingang eines Komparators 6 bzw. 7 verbunden, wobei der zweite Eingang jedes Komparators 6 bzw. 7 auf Nullpotential liegt. Damit steht also an den Ausgängen der Komparatoren 6 bzw. 7 ein Vorzeichensignal $U_{K1}$ bzw. $U_{K2}$ an, dessen Polarität der Polarität des entsprechenden Geber-Signals $U_{E1}$ bzw. $U_{E2}$ entspricht. Mit diesen Vorzeichensignalen wird die Auswahlschaltung 5 nach der beschriebenen logischen Funktion gesteuert, so daß in jedem Zeitpunkt die Summen- oder Differenzspannung bzw. deren invertierte Werte auf den Ausgang der Auswahlschaltung 5 durchgeschaltet werden. Am Ausgang der Auswahlschaltung 5 steht also die Hilfsspannung $U_Z$ an. Diese wird mit einem Differentiator 8 differenziert, so daß sich die differenzierte Spannung $U_{Di}$ ergibt. Diese Spannung wird einem gesteuerten Gleichrichter 9 zugeführt, der durch die Vorzeichensignale $U_{K1}$ und $U_{K2}$ nach dem ebenfalls bereits beschriebenen Verfahren gesteuert wird. Am Ausgang des gesteuerten Gleichrichters 9 steht damit die gewünschte Ausgangsspannung $U_A$ an.

Ein mögliches Ausführungsbeispiel für die Auswahlschaltung 5 ist in Figur 4 dargestellt. Dabei sind die Eingänge der Auswahlschaltung 5 jeweils über einen Halbleiterschalter 5a bis 5d mit dem Ausgang der Auswahlschaltung 5 verbunden. Die Halbleiterschalter 5a bis 5d werden von UND-Gattern 5e bis 5h angesteuert, wobei sich aufgrund der bereits dargestellten logischen Verknüpfung zwischen den Polaritätssignalen $U_{K1}$ und $U_{K2}$ und der Auswahl der Differenz bzw. der Summenspannung folgende logische Verknüpfungen für die Ansteuerung der Schalter 5a bis 5d ergeben :

$$U_{K1} \quad \bar{U}_{K2} \Rightarrow 5a$$
$$U_{K1} \quad U_{K2} \Rightarrow 5b$$
$$\bar{U}_{K1} \quad U_{K2} \Rightarrow 5c$$
$$\bar{U}_{K1} \quad \bar{U}_{K2} \Rightarrow 5d.$$

Damit wird also das Polaritätssignal $U_{K1}$ mit einem nichtinvertierenden und das Polaritätssignal $U_{K2}$ mit einem invertierenden Eingang des UND-Gatters 5e verbunden, der den Halbleiterschalter 5a ansteuert. Die Polaritätssignale $U_{K1}$ und $U_{K2}$ werden ferner mit nicht invertierenden Eingängen des UND-Gatters 5f verbunden, das den Halbleiterschalter 5b ansteuert. Das Polaritätssignal $U_{K1}$ wird außerdem mit einem invertierenden und das Polaritätssignal $U_{K2}$ mit einem nicht invertierenden Eingang des UND-Gatters 5b verbunden, das den Halbleiterschalter 5c ansteuert. Schließlich werden die Polaritätssignale $U_{K1}$ und $U_{K2}$ mit invertierenden Eingängen des UND-Gatters 5h verbunden, das den Halbleiterschalter 5d ansteuert.

Ein Ausführungsbeispiel für den gesteuerten Gleichrichter 9 ist schließlich in Figur 5 dargestellt. Dabei ist der Eingang des gesteuerten Gleichrichters 9, an dem die differenzierte Spannung $U_{Di}$ ansteht, über einen Halbleiterschalter 9a mit dem Ausgang und über die Reihenschaltung eines Inverters 9c und eines Halbleiterschalters 9b ebenfalls mit dem Ausgang des gesteuerten Gleichrichters 9 verbunden. Die bereits erläuterte logische Verknüpfung zur Steuerung des Gleichrichters 9, nämlich Inversion, wenn die Vorzeichensignale $U_{K1}$ und $U_{K2}$ gleich sind und keine Inversion, wenn die Vorzeichensignale $U_{K1}$ und $U_{K2}$ verschieden sind, werden mit Exklusiv-ODER-Gattern 9d und 9e realisiert, an deren Eingängen jeweils das Polaritätssignal $U_{K1}$ und $U_{K2}$ ansteht. Das Exklusiv-ODER-Gatter 9d ist mit dem Halbleiterschalter 9a und das Exklusiv-ODER-Gatter 9e, das einen invertierenden Ausgang aufweist, ist mit dem Halbleiterschalter 9b verbunden. Damit wird die gewünschte Steuerung des Gleichrichters 9 erzielt.

**Patentansprüche**

1. Verfahren zur Erzeugung einer drehzahlproportionalen Spannung mit einem inkrementalen Lagegeber, der zwei in Abhängigkeit von der Drehrichtung um 90° in positiver oder negativer Richtung gegeneinander verschobene Geber-Spannungen ($U_{E1}$, $U_{E2}$), mit drehzahlunabhängiger Amplitude liefert und der durch Addition und Subtraktion der ersten un zweiten Geber-Spannung eine Summenspannung ($U_s$) und eine Differenzspannung ($U_D$) erzeugt, so daß durch Zusammensetzen eine drehzahlabhängige, in ihren Vorzeichen der Drehrichtung des Lagegebers entsprechende Ausgangsspannung ($U_Z$) entsteht, dadurch gekennzeichnet, daß die Summenspannung ($U_S$) und die Differenzspannung ($U_D$) jeweils in einem Bereich von ± 45° um den Nulldurchgang der betreffenden Spannung ($U_S$, $U_D$) differenziert werden, und daß die differenzierten Spannungen ($U_{Di}$) in Abhängigkeit von der Phasenlage der ersten und der zweiten Geber- Spannung ($U_{E1}$, $U_{E2}$) gesteuert gleichgerichtet und zu einer Ausgangsspannung ($U_A$) zusammengesetzt werden.

2. Verfahren nach Anspruch 1, dadurch gekennzeichnet, daß die Summenspannung ($U_S$) auf einen Differentiator (8) durchgeschaltet wird, wenn die erste Geber-Spannung ($U_{E1}$) positiv und die zweite Geber-Spannung ($U_{E2}$) negativ ist, daß die Differenzspannung ($U_D$) auf den Differentiator (8) durchgeschaltet wird, wenn die erste und die zweite Geber-Spannung ($U_{E1}$, $U_{E2}$) positiv sind, daß die invertierte Summenspannung ($U_S$) auf den Differentiator (8) durchgeschaltet wird, wenn die erste Geber-Spannung ($U_{E1}$) negativ und die zweite Geber-Spannung ($U_{E2}$) positiv ist und daß die invertierte Differenzspannung ($U_D$) auf den Differentiator (8) durchgeschaltet wird, wenn die erste und die zweite Geber-Spannung ($U_{E1}$, $U_{E2}$) negativ sind.

3. Verfahren zur Erzeugung einer drehzahlproportionalen Spannung nach Anspruch 1, dadurch gekennzeichnet, daß zur gesteuerten Gleichrichtung die differenzierte Spannung ($U_{Di}$) invertiert wird, wenn die Momentanwerte der beiden Geber-Spannungen ($U_{E1}$, $U_{E2}$) dieselbe Polarität aufweisen und die differenzierte Spannung unverändert bleibt, wenn die Momentanwerte der beiden Geber-Spannungen ($U_{E1}$, $U_{E2}$) entgegengesetzte Polarität aufweisen.

4. Schaltungsanordnung zur Durchführung des Verfahrens zur Erzeugung einer drehzahlproportionalen Spannung nach Anspruch 1 oder 2 mit einem inkrementalen Lagegeber, der zwei in Abhängigkeit von der Drehrichtung um 90° in positiver oder negativer Richtung gegeneinander verschobene Geber-Spannungen ($U_{E1}$, $U_{E2}$) mit drehzahlunabhängiger Amplitude liefert und mittels Addierern (1, 2), Inverter (3, 4) Differenzierstufen (8) und Null-Komparatoren (6, 7) eine drehzahlabhängige Ausgangsspannung erzeugt, dadurch gekennzeichnet, daß die beiden Geber-Spannungen ($U_{E1}$, $U_{E2}$) des Lagegebers jeweils einem Eingang eines Addierers (1) und eines Subtrahierers (2) zugeführt werden, daß die Ausgänge des Addierers (1) und des Subtrahierers (2) direkt und über je einen Inverter (3, 4) mit den Eingängen einer Auswahlschaltung (5) verbunden sind, daß die Auswahlschaltung (5) durch zwei Null-Komparatoren (6, 7) gesteuert wird, an deren Eingängen jeweils eine der beiden Geber-Spannungen ($U_{E1}$, $U_{E2}$) des Lagegebers ansteht, daß die Auswahlschaltung (5) in Abhängigkeit von den Ausgangssignalen ($U_{K1}$, $U_{K2}$) der beiden Null-Komparatoren (6, 7) einen ihrer Eingänge auf ihren Ausgang durchschaltet, daß der Auswahlschaltung eine Differenzierstufe (8) nachgeschaltet ist und daß der Ausgang der Differenzierstufe (8) mit einem in Abhängigkeit von den Ausgangssignalen der beiden Null-Komparatoren (6, 7) gesteuerten Gleichrichter (9) verbunden ist, an dessen Ausgang das gewünschte drehzahlproportionale Ausgangssignal ($U_A$) ansteht.

**Claims**

1. A method of generating a speed-proportional voltage with an increment position indicator which supplies two indicator voltages ($U_{E1}$, $U_{E2}$) mutually displaced by 90° in the positive or negative direction in dependence upon the direction of rotation and having a speed-independent amplitude, which position indicator generates a sum voltage ($U_S$) and a difference voltage ($U_D$) by adding and subtracting the first and second indicator voltages, so providing by combination a speed-dependent output voltage ($U_Z$) whose symbols correspond to the direction of rotation of the position indicator, characterised in that the sum voltage ($U_S$) and the difference voltage ($U_D$) are respectively differentiated in a region of ± 45° in relation to the zero passage of the respective voltage, and that in dependence upon the phase position of the first and second indicator voltage ($U_{E1}$, $U_{E2}$) the differentiated voltages ($U_{Di}$) are controlled so as to be rectified and combined to form an output voltage ($U_A$).

2. A method as claimed in Claim 1, characterised in that the sum voltage ($U_S$) is switched through to a differentiator (8) if the first indicator voltage ($U_{E1}$) is positive and the second indicator voltage ($M_{E2}$) is negative, that the difference voltage ($U_D$) is switched through to the differentiator (8) if the first and the second indicator voltage ($U_{E1}$, $U_{E2}$) are positive, that the inverted sum voltage ($U_S$) is switched through to the differentiator (8) if the first indicator voltage ($U_{E1}$) is negative and the second indicator voltage ($U_{E2}$) is positive, and that the inverted difference voltage ($U_D$) is switched through to the differentiator (8) if the first and second indicator voltages ($U_{E1}$, $U_{E2}$) are negative.

3. A method for the generation of a speed-proportional voltage as claimed in Claim 1, characterised in that for the controlled rectification the differentiated voltage ($U_{Di}$) is inverted if the instantaneous

5

values of the two indicator voltages ($U_{E1}$, $U_{E2}$) have the same polarity and the differentiated voltage remains unchanged if the instantaneous values of the two indicator voltages ($U_{E1}$, $U_{E2}$) have an opposite polarity.

4. A circuit arrangement for implementation of the method for generating a speed-proportional voltage as claimed in Claim 1 or 2, with an increment position indicator which supplies two indicator voltages ($U_{E1}$, $U_{E2}$) which are mutually displaced by 90° in the positive or negative direction in dependence upon the direction of rotation and have a speed-independent amplitude, and which position indicator produces a speed-independent output voltage by means of adders (1, 2), inverters (3, 4), differentiating stages (8) and zero comparators (6, 7), characterised in that the two indicator voltages of the position indicator are respectively fed to an input of an adder (1) and a subtractor (2), that the outputs of the adder (1) and of the subtractor (2) are connected to the inputs of a selection circuit (5) directly and by means of an inverter (3, 4), that the selection circuit (5) is controlled by two zero-comparators (6, 7), to whose inputs one of the two indicator voltages ($U_{E1}$, $U_{E2}$) of the position indicator is respectively connected, that the selection circuit (5) switches one of its inputs through to its output in dependence upon the output signals ($U_{K1}$, $U_{K2}$) of the two zero-comparators (6, 7), that the selection circuit is followed by a differentiating stage (8) and that the output of the differentiating stage (8) is connected to a rectifier (9) controlled in dependence upon the output signals of the two zero-comparators (6, 7) and at whose output the required speed-proportional output signal ($U_A$) occurs.

## Revendications

1. Procédé pour produire une tension, proportionnelle à la vitesse de rotation, à l'aide d'un capteur incrémental de position qui fournit deux tensions ($U_{E1}$, $U_{E2}$), décalées l'une par rapport à l'autre à 90° dans le sens positif ou négatif en fonction de la vitesse de rotation et possédant une amplitude indépendante de la vitesse de rotation et qui produit, par addition et soustraction de la première et de la seconde tension du capteur, une tension somme ($U_S$) et une tension différence ($U_D$) de sorte que par réunion on obtient une tension de sortie ($U_Z$), qui dépend de la vitesse de rotation et dont le signe correspond au sens de rotation du capteur de position, caractérisé en· ce qu'on effectue une différentiation de la tension somme ($U_S$) et de la tension différence ($U_D$) respectivement dans une zone de ±45° autour du point d'annulation de la tension ($U_S$, $U_D$) considérée et qu'on redresse les tensions différentiées ($U_i$) d'une manière commandée en fonction de la position de phase de la première et de la seconde tension ($U_{EI}$, $U_{E2}$) du capteur et qu'on les réunit pour obtenir une tension de sortie ($U_A$).

2. Procédé suivant la revendication 1, caractérisé par le fait qu'on transmet directement la tension somme ($U_S$) à un circuit différentiateur (8) lorsque la première tension ($U_{E1}$) du capteur est positive et que la seconde tension ($U_{E2}$) du capteur est négative, qu'on transmet directement la tension différence ($U_D$) au circuit différentiateur (8) lorsque la première et la seconde tension ($U_{E1}$, $U_{E2}$) du capteur sont positives, qu'on transmet directement la tension somme inversée ($\bar{U}_S$) au circuit différentiateur (8) lorsque la première tension ($U_{E1}$) du capteur est négative et que la seconde tension ($U_{E2}$) du capteur est positive et qu'on transmet directement la tension différence inversée ($\bar{U}_D$) au circuit différentiateur (8) lorsque la première et la seconde tension ($U_{E1}$, $U_{E2}$) du capteur sont négatives.

3. Procédé pour produire une tension proportionnelle à la vitesse de rotation suivant la revendication 1, caractérisé par le fait que pour effectuer le redressement commandé, on inverse la tension différentiée ($U_{Di}$) lorsque les valeurs instantanées des deux tensions ($U_{E1}$, $U_{E2}$) du capteur possèdent la même polarité, et que la tension différentiée reste inchangée lorsque les valeurs instantanées des deux tensions ($U_{E1}$, $U_{E2}$) du capteur possèdent des polarités opposées.

4. Montage pour la mise en œuvre du procédé pour produire une tension proportionnelle à la vitesse de rotation, suivant la revendication 1 ou 2, comportant un capteur incrémental de position, qui fournit deux tensions ($U_{E1}$, $U_{E2}$) décalées réciproquement de 90° dans le sens positif ou dans le sens négatif en fonction du sens de rotation et possédant une amplitude indépendante de la vitesse de rotation et qui produit, à l'aide d'additionneurs (1, 2), d'inverseurs (3, 4), d'étages différentiateurs (8) et de comparateurs de zéro (6, 7), une tension de sortie dépendant de la vitesse de rotation, caractérisé par le fait que les deux tensions ($U_{E1}$, $U_{E2}$) du capteur de position sont envoyées respectivement à une entrée d'un additionneur (1) et d'un soustracteur (2), que les sorties de l'additionneur (1) et du soustracteur (2) sont réunies directement et par l'intermédiaire respectivement d'un inverseur (3, 4) aux entrées d'un circuit de sélection (5), que le circuit de sélection (5) est commandé par deux comparateurs de zéro (6, 7), aux entrées desquels est appliquée respectivement l'une des deux tensions ($U_{E1}$, $U_{E2}$) du capteur de position, que le circuit de sélection (5) transmet directement, en fonction des signaux de sortie ($U_{K1}$, $U_{K2}$) des deux comparateurs de zéro (6, 7), l'une de leurs sorties à sa sortie, qu'un étage différentiateur (8) est branché en aval du circuit de sélection et que la sortie de l'étage différentiateur (8) est reliée à un redresseur (9) commandé en fonction des signaux de sortie des deux comparateurs de zéro (6, 7), à la sortie desquels est présent le signal de sortie désiré ($U_A$), proportionnel à la vitesse de rotation.

FIG 1

FIG 2

FIG 3

FIG 4

FIG 5